# EUROPEAN PATENT SPECIFICATION

(11) **EP 2 807 810 B1**
(45) Date of publication and mention of the grant of the patent: **22.01.2020**
(21) Application number: 13707116.3
(22) Date of filing: 23.01.2013
(51) Int. Cl.: H04L 29/06, H04N 21/258, H04N 21/472, H04N 21/462, G06F 21/10, H04N 21/254, H04N 21/835

(54) **METHOD AND SYSTEM FOR AUHTORISATION IN A CONTENT PROVISION SYSTEM**
VERFAHREN UND SYSTEM ZUR AUTORISATION IN EINEM INHALTSBEREITSTELLUNGSSYSTEM
PROCÉDÉ ET SYSTÈME D'AUTORISATION DANS UN SYSTÈME DE FOURNITURE DE CONTENU

(30) Priority: 23.01.2012 GB 201201063
(43) Date of publication of application: 03.12.2014
(73) Proprietor: Youview TV Ltd, London EC3R 6YT (GB)
(72) Inventor: ROY, Andre, Rickmansworth Hertfordshire WD3 4JA (GB); HUNTER, Jeffrey, Dorking Surrey RH4 3NT (GB); POOLE, Christopher, Reigate Surrey RH2 9NY (GB); EARNSHAW, Nigel, Church Crookham Fleet GU52 6ZA (GB)
(74) Representative: Robson, Aidan John
(86) International application number: PCT/EP2013/051256
(87) International publication number: WO 2013/110669

(56) References cited:
- US-A1- 2009 016 537
- WEISE J: "Public Key Infrastructure Overview", SUN BLUEPRINTS, SUN MICROSYSTEMS, US , 1 August 2001 (2001-08-01), pages 1-29, XP008141662, Retrieved from the Internet: URL:http://web.archive.org/web/20040707203 321/http://www.sun.com/blueprints/0801/pub lickey.pdf
- "Digital Video Broadcasting (DVB); Multimedia Home Platform (MHP) Specification 1.0.3; Draft ES 201 812" In: 1 August 2001 (2001-08-01), IEEE, LIS, SOPHIA ANTIPOLIS CEDEX, FRANCE, XP055080469, vol. V1.1.1, page 1-46, 151-196, page 28, line 33 - page 29, last line page 41, line 1 - page 46, last line page 151, line 1 - page 153, last line page 161, line 4 - page 196, last line
- NYSTROM B KALISKI RSA SECURITY M: "PKCS #10: Certification Request Syntax Specification Version 1.7; rfc2986.txt", 20001101, 1 November 2000 (2000-11-01), XP015008769, ISSN: 0000-0003
- DIERKS CERTICOM C ALLEN CERTICOM T: "The TLS Protocol Version 1.0; rfc2246.txt", NETWORK WORKING GROUP RFC 1717, INTERNET SOCIETY (ISOC) 4, RUE DES FALAISES CH- 1205 GENEVA, SWITZERLAND, CH, 1 January 1999 (1999-01-01), XP015008030, ISSN: 0000-0003

## Description

The present invention relates to an authorisation system, specifically an authorisation system for use in a content provision system. This invention also relates to a method of authorisation and to a receiver/decoder.

In the field of electronic data transfer, there has been much research in the security and reliability of the transmission of data. It is an intrinsic (and useful) property of electronic data that it can be copied and retransmitted. Many methods have been devised to overcome the negative aspects of this property.

The present invention relates primarily to the situation where the data is in the form of audio/video (A/V) content. In this case, the security of the data is important as charges and subscriptions may apply to certain content, and content providers may wish to retain control over their content and/or ensure that their content is only being sent to an authorised user, or to a device that has been authorised.

There are a multitude of content providers who use various delivery methods to transfer data, such as Digital Terrestrial Television (DTT), Internet Protocol Television (IPTV) and Video On Demand (VOD). Each has their own set of requirements when authorising a user, and different requirements on the use of data. For example VOD may have a time limit relating to when it can be viewed, and it may not be possible to record IPTV. This creates a complex network of trust 'pairings' between user devices and service or content providers.

In audio/video broadcasting and content provision systems, it is desirable to authenticate both users of the system and the system itself to users. In one example of a prior art authorisation system, each separate content receiving device (e.g. set-top box) produced by a different manufacturer has an independent trust relationship with each available content provider.

In order for an effective and efficient content provision system to operate, content providers ideally have a trust relationship with the consumer devices and vice versa. This is so that the content providers know that the device they are supplying content to is an authorised device which, for example, has the requisite subscription or Digital Rights Management (DRM) software. This trust relationship must also work in the reverse; the consumer device ideally is able to trust that data it receives comes from an authorised provider, to reduce the chances of malicious software being downloaded, for example. A current solution is for each content provider to have an individual trust relationship with each device (and hence user). This becomes inefficient when there are a large number of content providers and/or users. The present invention aims to alleviate at least some of these problems.

The document "Digital Video Broadcasting (DVB); Multimedia Home Platform (MHP) Specification 1.0.3; Draft ES 201 812", 1 August 2001 (2001-08-01), IEEE, LIS, SOPHIA ANTIPOLIS CEDEX, FRANCE, XP055080469,vol. V1.1.1, discloses the DVB solution for Multimedia Home Platforms (MHPs). The MHPs run software applications that implement interactive services. Broadly, according to the present invention there is provided a system and method adapted for implementing an authorisation system so that a multitude of consumers or consumer devices can receive data from a multitude of content providers in a secure and efficient way via a trust authority.

The system and method are adapted so that content providers and consumer devices can be independently authorised as part of an ecosystem wherein consumer devices and content providers can mutually recognise one-another as authorised parties within the ecosystem.

According to one aspect of the invention, there is provided a method according to claim 1.

The term "receiver/decoder" as used herein may connote a receiver for receiving either encoded or non-encoded signals, for example, television and/or radio signals, which may be broadcast, streamed, downloaded or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

It is envisaged that the system as herein described may be implemented wholly on a central server, or a set of interconnected servers, which is/are connectable to a plurality of remote client devices. Alternatively, aspects of the system may be implemented, at least in part, on the or each (remote) client / user device.

It is envisaged that aspects of the system, user device and/or method described herein may be implemented in software running on a computer such as a personal computer or a receiver/decoder (which may be connected directly to a monitor or to a television or other display means), and it is to be appreciated that inventive aspects may therefore reside in the software running on such devices.

Other aspects of this system, user device and/or method may be implemented in software running on various interconnected servers, and it is to be appreciated that inventive aspects may therefore reside in the software running on such servers.

Further features of the invention are characterised by the independent and dependent claims.

Any apparatus feature as described herein may also be provided as a method feature, and vice versa. As used herein, means plus function features may be expressed alternatively in terms of their corresponding structure, such as a suitably programmed processor and associated memory.

Furthermore, features implemented in hardware may generally be implemented in software, and vice versa. Any reference to software and hardware features herein should be construed accordingly.

Features of this disclosure and/or advantages of the invention include:
- A system adapted to enable a content provider to trust a device, and a device to trust a content provider, without having individual trust relationships, including utilising a public key infrastructure for this purpose.
- Two-way trust, content providers trust devices, devices trust content providers.
- Means of ensuring a device (and hence user) has the requisite certificates for the required content and providing the content in a secure and non-transferable way.
- Putting a key onto a device, where the key may be known or unknown to the Original Equipment Manufacturer (OEM). This key is only accessible by the device's System On Chip (SoC).
- A central authority overlooking trust relationships.
- The use of Public Key Infrastructure (PKI) - with a secure (Master) key associated with the device.
- Each device having a unique identity for content protection and to assist with management and monitoring.
- Keys provisioned to the device being renewable/revocable.
- The Master Key (MK) on the device is not accessible by software on the device other than via the SoC's secure processor.
- The Master Key may be derived from a secret that is permanently bound in the SoC.
- If the MK is an unknown key, an alternative key is used to provision keys.
- The Master Key is rooted in, and bound to, the SoC.
- At least two 'levels' of keys: (i) a MK - nothing can change this, secure to device; and (ii) an Operational Key (OK) - used for day to day operations, and which is renewable/revocable.
- The manner in which the key is derived is implementation dependent and may use key ladders.
- The keys may take the form of asymmetric private keys with associated public key certificates.
- The device stores the public key certificate that corresponds to each of the private keys held securely by the device. In contrast to the certificates that are used as trust anchors, these certificates do not need to be held securely.
- In addition to the trust anchors, the device handles public key certificates that accompany documents and/or data protected by private key signatures to assert the authority of such signatures.
- A most trusted authority, which technically manifests itself as a self signed X.509 certificate.
- The device has the capability to securely manage confidential key material.
- The device prevents manipulation of the flash memory buses, or is robust against such manipulation. This is typically achieved by loading code into Synchronous Dynamic Random Access Memory (SDRAM) before verification and execution, or by physical means.
- The device protects against the alteration or replacement of all boot loaders, the Linux kernel, the Linux root filesystem and all other file systems within the device from which code may execute or trust anchors are stored.
- The device verifies the platform software on each boot.
- Subsequent levels of a boot up can be verified through signatures using keys assured in earlier levels.

Further information may be found in the following documents:
- [CMS] - Cryptographic Message Syntax (CMS) - RFC 3852 - July 2004
- [PKIX] - Internet X.509 Public Key Infrastructure Certificate and Certificate Revocation List (CRL) Profile - RFC 5280 - May 2008
- [RFC 2585] - Internet X.509 Public Key Infrastructure Operational Protocols: FTP and HTTP - RFC 2585 - May 1999
- [RFC 3279] - Algorithms and Identifiers for the Internet X.509 Public Key Infrastructure Certificate and Certificate Revocation List (CRL) Profile - April 2002
- [TR-069] - CPE WAN Management Protocol v1.1 - December 2007

Furthermore, reference is made to UK patent application number GB1020290.1, in the name of YouView TV Ltd.

The invention is now described, purely by way of example, with reference to the accompanying figures, in which:
Figure 1 shows a schematic overview of an authorisation system;
Figure 2 shows a more detailed schematic diagram of a portion of the authorisation system of Figure 1;
Figure 3 shows an example of the authorisation system of Figure 2 in use;
Figure 4 shows a diagram of the processing steps undertaken by the system of Figure 2 in operation;
Figure 5 shows details of the ways in which keys are stored and used in a user device of the system of Figure 2; and
Figure 6 shows an example of a Trust Hierarchy.

### Overview

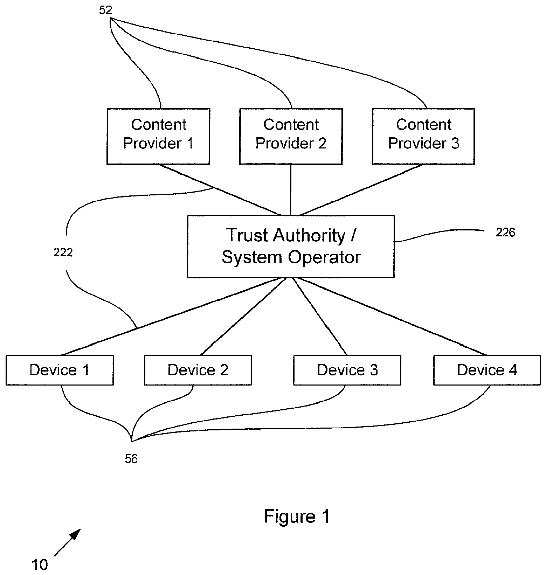

Figure 1 shows a schematic overview of an authorisation system 10 for a content provision system. The authorisation system 10 includes a Trust Authority / System Operator 226 which is adapted to vet and authorise a plurality of user devices 56, each optionally being provided by a different manufacturer, as well as a plurality of independent and/or separate content providers 52, each adapted to provide data content items to users, via said user devices 56. The trust authority / system operator 226 is also referred to herein as a most trusted authority, or root certificate authority, depending on the context.

The content provision system is used to provide users with content, typically in the form of audio/video media content, such as broadcast content. In this case, the user devices 56 are in the form of set-top boxes (STBs), or the like, connectable to displays such as visual display units (VDUs), televisions or monitors.

The authorisation system 10 uses Public Key Infrastructure (PKI) involving the use of public and private keys and certificates to implement a trust model between the system operator 226, the plurality of user devices 56, and each of the content providers 52 thereby to ensure that all the entities in the system 10 are authenticated and appropriately authorised.

The System Operator 226 acts as a root certification authority, issuing and checking certificates of the other entities in the system 10 (as discussed in more detail below).

The system operator 226 hence determines which user devices 56 and content providers 52 are authorised to form part of the system 10.

This authentication system 10 results in a 'horizontal' model of trust in which numerous device manufacturers can use the same trust model to enable their devices to receive data from multiple different content providers. This is as opposed to a 'vertical' model in which different manufacturers must each have separate trust relationships with each content provider.

In this way, the number of required trust 'pairings' 222 (see Figure 1) between a number p of content providers 52 and a number m of devices 56 is reduced from an expected p x m to a more efficient p + m. The efficiency gains become increasingly large the larger p and m become. This system 10 is also much easier to add to or modify at a later stage. For example, were another content provider 52 to wish to join the system, only one additional trust arrangement 222 would need to be made; previously, without the use of Trust Authority 226, a new trust arrangement 222 would need to be set up for each device 56, which could become onerous.

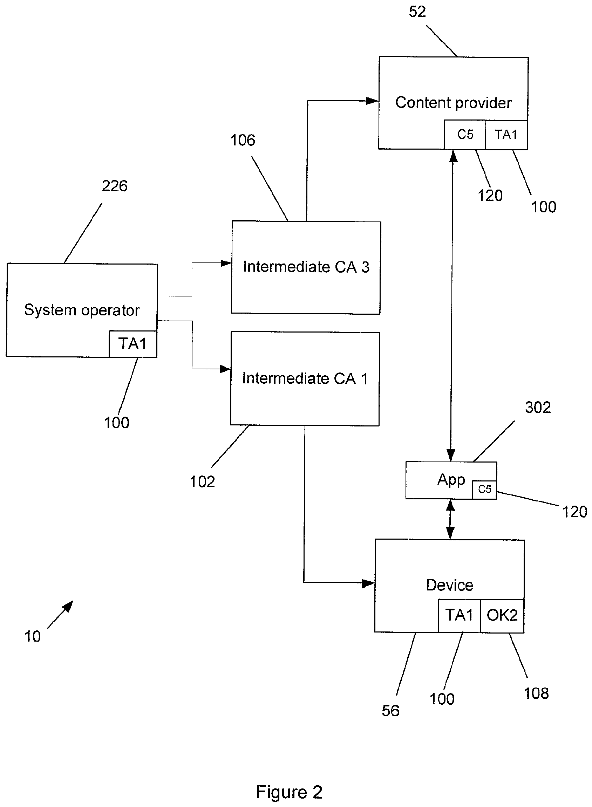

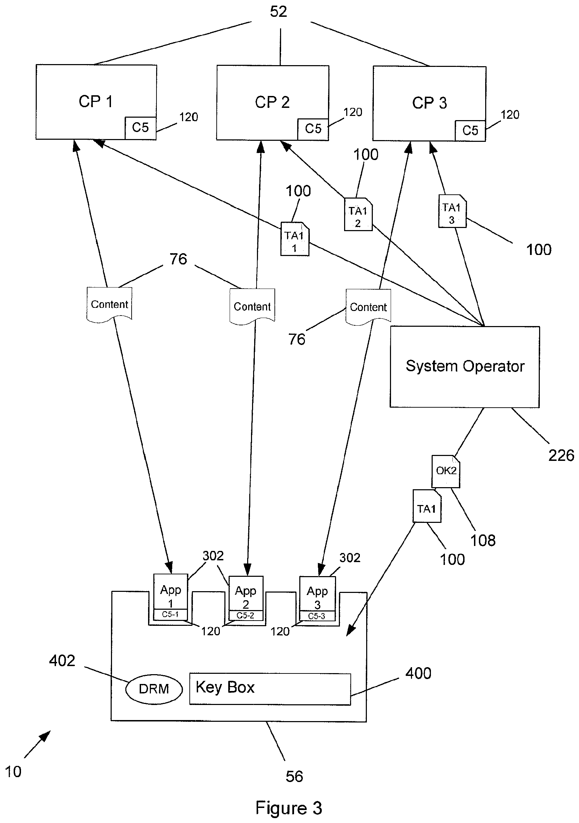

As shown in Figures 2 and 3, the system operator 226 authorises content providers 52 and devices 56 in the following way. The system operator 226 provides a public root certificate TA1 100 (a "trust root") to both the devices 56 and the content providers 52. The provision of TA1 100 to the device 56 enables the device 56 to validate a C5 certificate 120 that will be presented to the device 56 along with a specific software application (app) 302 signed using that C5 certificate. This application is a software plug-in provided by each content provider 52 and enables the device 56 to access data content provided by the content provider 52, or facilitate other services provided by the content provider 52. The C5 certificate 120 can be recognised as originating from the system operator 226 as it is derived from or rooted in TA1 100 (see Figure 2). TA1 100 is a self-signed certificate typically based on the X.509 standard.

The applications 302 are authorised either directly by the system operator 226, or by the content provider 52 with consent from the system operator 226. Thus, the device 56 can recognise the application 302 as authentic and trust the application 302 to obtain content from an authorised content provider 52. The reverse is also true, the content provider 52 can see that the device 56 is authorised to use the application 302 to access content (as explained in further detail below).

As shown in Figure 2, the system operator 226 issues an operational public key certificate 108 (e.g. OK2) to a device 56 which wishes to be authenticated. This may follow a step in which the device 56 requesting to be authenticated transmits a public portion of a cryptographic OK2 key pair it possesses to the system operator 226. In this case the system operator 226 signs the public portion of OK2 and issues the device 56 with a corresponding OK2 certificate 108. The provision of this public key certificate may occur via an intermediate certificate authority 102. OK2 108 is rooted in, or derived from, the trust root TA1 100 and can be recognised as such by any entity with knowledge of TA1 100. Thus, a content provider 52 can recognise authorised devices 56 by comparing the OK2 certificate 108 with the TA1 100 certificate held by the content provider 52.

As mentioned above, each content provider 52 provides an application 302 to a user device 56 to enable it to communicate and/or interact with the content provider 52, and hence receive content items and/or services from the content provider 52. Device 56 and content provider 52 communicate using this application 302. Each application 302 is associated with a particular content provider 52. Applications 302 are used so that each content provider 52 can implement their own method of communicating with a device 56.

Each application 302 is also authenticated or authorised so that the devices 56 know that the content they receive via the application 302 is from an authorised content provider 52. These applications 302 are authorised by being signed using the C5 "app signing" certificate 120, which is issued by the system operator 226, or by an intermediate entity 106. The C5 certificate 120 is also rooted in TA1 100 so that other entities in the system 10 can confirm the authenticity of the application 302. The process of actually signing the applications 302 with the C5 certificate 120 may be handled by either the content providers 52 themselves, or by the system operator 226. The C5 certificate 120 may then be provided by the content provider 52 along with, or bundled to, the application 302. The issuance of the C5 certificate 120 to the content provider 52 effectively constitutes the authorisation of the content provider 52. The C5 certificate 120 may be based on a C5 public key - forming one half of an asymmetric public/private key pair - originally held by the content provider 52, which is provided by the content provider 52 to the system operator 226 for signing by the system operator 226.

Once the above authentication steps have been completed, the system 10 comprises a trusted content provider 52 with a signed application 302 and a trusted device 56 with an operational public key certificate OK2 108. The application 302 is then passed to the device 56, either directly by the system operator, the content provider 52, or by other means. Typically, when a user device is switched on, applications 302 corresponding to content providers 52 which have been recently authorised by the system operator 226 are downloaded onto the user device 56 so that the user can access content from new content providers 52 using these new applications 302. This process occurs repeatedly so that the device 56 possesses an application 302 for each content provider 52 it has access to.

Once the above steps have been completed, the system operator 226 no-longer needs to be directly involved in the subsequent communication between user device 56 and content provider 52. The system operator 226 also has no direct role in the transfer of content 76. After the devices 56 and content providers 52 have been authorised or authenticated, the system operator 226 effectively 'steps out'.

When the device 56 requests content from a certain content provider 52, the relevant application 302 is executed. The application 302 communicates with the content provider 52, passing the public key certificate OK2 108 to the content provider 52. The content provider 52 can then check whether the user device 56 is authorised by checking OK2 108 against TA1 100. The device 56 carries out a similar procedure to authenticate the application 302 by checking C5 120, which was used to sign the application 302, against TA1 100. Once these steps have been completed successfully, the device 56 trusts the content provider 52 and the content provider 52 trusts the device 56. The requested content can then be passed from the content provider 52 to the device 56 using a suitable communication, encoding and encryption means.

The certificates OK2 108 and C5 120 are revocable. This is so that if a device's subscription has expired, for example, it is no longer able to receive certain content. This could be achieved by adding a time limit to the certificate, or a certificate revocation list (CRL) being accessible so that devices 56 and content providers 52 can check if the certificates are still valid.

Figure 3 shows the system described above in use. The system operator 226 authorises the content providers 52 by issuing the C5 certificates 120. The application 302 provided by a content provider 52 is then signed using the C5 certificate 120, either by the content provider 52 itself, or by the system operator 226. The system operator 226 also provides content providers 52 with TA1 100. The system operator 226 authorises the device 56 by issuing OK2 108. The device 56 is also provided with TA1 100. As mentioned above, the applications 302 corresponding to each content provider 52 enable direct communication between each device 56 (one of which is shown in Figure 3) and each content provider 52. The device 56 is shown to have other embedded software such as Digital Rights Management (DRM) software 402 and a key box 400 where private keys may be stored. Once the content providers 52, applications 302 and device 56 have received their certificates, as described above, content 76 can be transferred directly between them. This occurs directly between the content provider 52 and the device 56 using the corresponding application 302.

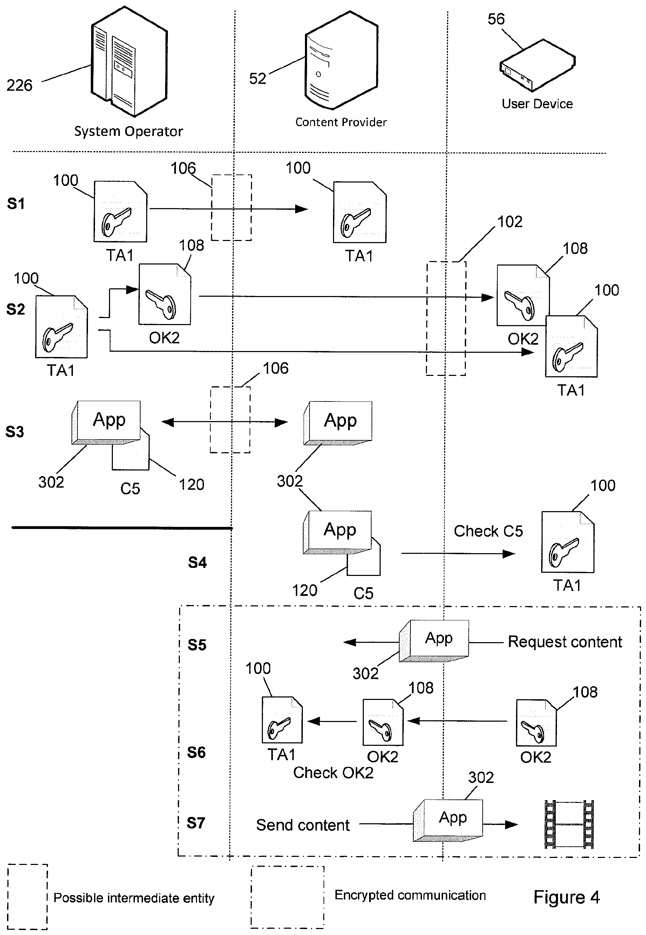

Figure 4 shows a process undertaken by the various elements of the system 10 in use. Typically, there are of course numerous content providers 52 and user devices 56, only one of each is shown for clarity.

The process begins with the system operator 226 providing a public key certificate TA1 100 to a content provider 52 in step S1. TA1 100 is the trust root, or alternatively a certificate derived from, or rooted in, TA1 100. This process may occur via an intermediate entity 106 as shown in Figure 2. This public root certificate TA1 100 allows the content provider 52 to check whether or not particular user devices 56 are authorised.

The system operator 226 then authorises a user device 56 in step S2. The system operator 226 provides a public key certificate OK2 108, which is rooted in TA1 100, to the user device 56 along with TA1 100. Again, this may occur via an intermediate entity 102 as shown in Figure 2. The additional step of rooting OK2 108 in TA1 100, rather than only using TA1 100 directly is included so that the system operator 226 can revoke the authorisation of any user device 56 at any time without having to change the trust root TA1 100.

The final step undertaken by the system operator 226 is to authorise an application 302 provided by a content provider 52 in step S3. In one example, a content provider 52 submits an application 302 to the system operator 226 for authorisation. The system operator 226 signs the application 302 using the application signing certificate C5 120, which identifies it as an authorised application to all the members of the system 10. Alternatively, the system operator 226 issues the content provider with the C5 certificate 120 and the content provider then signs the application 302 using this certificate. In certain examples, the C5 certificate might be provided by a trusted intermediate certificate authority 106. Steps S1-S3 may occur in any order, or as and when required by the system, for example, when a new content provider 52 is set up.

Steps S4-S7 are preferably performed independently of the system operator 226, with the content provider 52 communicating directly with the user device 56. The authorised / signed application 302 is sent to the user device 56, typically bundled together with the C5 certificate 120, and the certificate C5 120 and signed application 302 are checked in step S4 by the user device 56 so that the user device 56 knows that the application has been authorised. This check involves checking the C5 certificate 120 against TA1 100, which is held by the device 56, and checking the validity of the C5 certificate 120 (such as its expiry date and relevant policies).

The user device 56 then requests content from the content provider 52, using the relevant content provider's application 302. The content provider 52 then checks the authenticity of the user device 56 in step S6 by checking OK2 against TA1, which is also held by the content provider 52. The authenticity of the C5 certificate 120 may also be re-checked at this stage by the device 56 as described above; when running / executing applications 302.

Once the authorisation has been mutually confirmed, content provision can take place. This process may occur in a channel exclusive to the content provider 52 and the user device 56, and may be encrypted. The content provider 52 then sends the content in step S7 via the application 302.

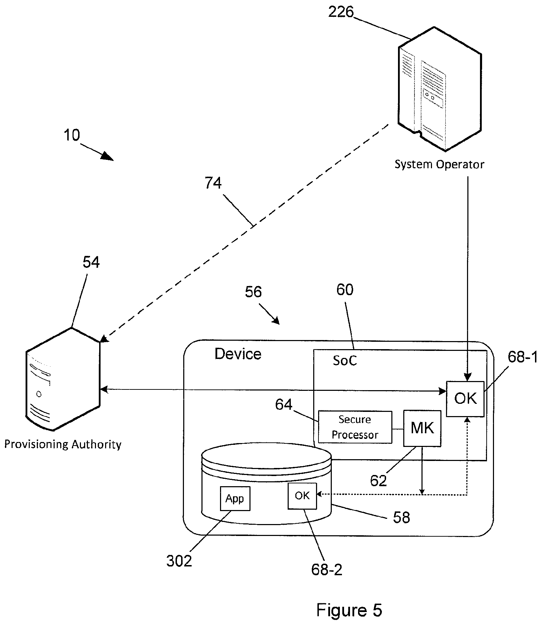

Figure 5 shows the key use and storage in the device 56. In one example, a provisioning authority 54 is authorised by the System Operator 226 and supplies a user device 56 with a set of cryptographic keys. In one example, the provisioning authority 54 is operated or administered by the original equipment manufacturer (OEM) that produces the user devices 56.

The user device 56 comprises a System-on-a-Chip (SoC) 60 in combination with local storage 58 and is typically a set-top-box (STB), receiver-decoder, or a personal computer (PC) - or indeed any device adapted to send and receive data, specifically audio/video content. Similarly, content provider 52 may be an audio/video content provider, or any entity which provides data.

In this example, the system employs a number of general types of cryptographic keys:
- A single master key (MK) 62
   MK 62 is the highest level cryptographic key, and is the basis (directly or indirectly) for all other public key certificates and keys used by the user device. MK 62 is typically hard-coded during manufacture of device 56 so that other secure keys can be derived from it securely. MK 62 is not accessible to any part of the device 56 apart from the secure processor on the SoC 64. MK 62 is, or is derived from, a device-unique secret which is bound in the SoC 60 during device manufacture.
- A set of operational public key certificates (OK) 68
   OK 68 are used in the day-to-day running of device 56, for example, during the requesting and receiving of content, and during the execution and updating of software. OK2 108 described above is an example of an operational public key certificate. These certificates can be renewed, changed or revoked by the System Operator 226. These certificates may be provided and renewed in accordance with a user's subscriptions, or defined by the Content Providers 52 for example. In some embodiments these certificates are provided during manufacture.

A single OK 68 is shown, but in practice there are a number of these, as well as other types of keys, but only a single MK 62.

Further details relating to the authorisation system 10 are now provided.

The described authorisation system and trust model provide the following advantages and/or functionality:
- Protection of Audio/Video (A/V) content using the defined content protection mechanisms, including Digital Rights Management (DRM).
- Allowing content providers to verify that their content is going to a compliant device.
- Protecting the confidentiality of user data.
- Providing a secure means of updating the software on the devices.
- Providing a means to validate configuration data.
- Controlling which applications can run on a client device and granting appropriate access to Application Programming Interfaces (APIs).
- Allowing secure remote management of the devices (where supported and where enabled by the user).

### Platform trust hierarchy

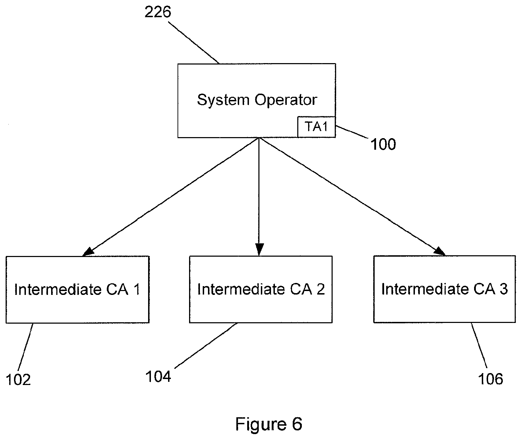

The System Operator (226, Figure 1) is responsible for the Platform Trust Hierarchy which is subdivided into several levels which form a hierarchy, each part associated with different aspects or areas of the system. Figure 6 shows an example of a Platform Trust Hierarchy formed by a plurality of operational trusted assets, comprising a Root Certificate Authority 226 and three intermediate Certification Authorities (CA) for: Service and Device Identity 102, Platform Management 104; and Application Management 106. It should be noted that Figure 6 shows one example of a possible hierarchy and many other examples are within the scope of the invention.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. A method of authorising multiple user devices (56) and multiple content providers (52) in a content provision system (10), the method comprising:
providing each content provider with a content provider authorisation certificate (100);
providing each user device with a user device authorisation certificate (100), wherein the content provider authorisation certificates for the multiple content providers and the user device authorisation certificates for the multiple user devices originate from a common source; and
determining whether each content provider (52) and each user device (56) is authorised to participate in the content provision system via a mutual exchange and comparison of said certificates between respective content providers and user devices;
wherein each user device is configured to execute an application (302) provided by each respective content provider to enable said user device to interact with said content provider.

2. A method according to Claim 1, further comprising signing said application with the content provider authorisation certificate (100) thereby to authenticate or authorise said application to user devices.

3. A method according to Claim 2, wherein the application is signed by a Root Certificate Authority.

4. A method according to Claim 3, wherein the application is signed by the content provider.

5. A method according to any of Claims 2 to 4, wherein the signed application is provided to the user device via the content provider and/or via a central server forming part of the content provision system.

6. A method according to Claim 5, wherein the signed application is bundled together with the content provider authorisation certificate.

7. A method according to Claim 6, wherein the user device checks the authorisation of the application at any one or more of the following stages: the downloading of the application to the user device; the installation of the application on the user device; and the execution of the application on the user device.

8. A method according to any of Claims 1 to 7, wherein the application enables a content provider to transfer content items, typically audio/visual media items to a user device.

9. A method according to any of Claims 1 to 8, wherein the application enables direct
communication between the content provider and the user device.

10. A method according to any of Claims 1 to 9, wherein the application enables encrypted communication between the content provider and the user device.

11. A method according to any of the preceding claims, wherein the user device transmits its certificate to a content provider together with a request for content and wherein the content provider checks the authorisation of the user device thereby to determine whether the user device is an authorised user device within the content provision system.

12. A system for authorising multiple user devices (56) and multiple content providers (52) in a content provision system (10), the system comprising:
multiple user devices (56) and multiple content providers (52);
means (226) for providing each content provider with a content provider authorisation certificate (100);
means (226) for providing each user device with a user device authorisation certificate (100), wherein the content provider authorisation certificates for the multiple content providers and the user device authorisation certificate for the multiple user devices originate from a common source; and
means for determining whether each content provider and each user device is authorised to participate in the content provision system via a mutual exchange and comparison of said certificates between respective content providers and user devices.
wherein each user device is configured to execute an application (302) provided by each respective content provider to enable said user device to interact with said content provider.

13. A system according to Claim 12, wherein the or each user device is in the form of a receiver/decoder, for example a Set Top Box, STB, preferably connectable to a display means such as a television.

14. A system according to Claim 13, wherein each user device and/or content provider is connectable to a communication network.

15. A system according to any of Claims 12 to 14, further comprising a central server comprising means for generating or signing the certificates.

## Patentansprüche

1. Verfahren zum Autorisieren mehrerer Benutzergeräte (56) und mehrerer Inhaltsanbieter (52) in einem Inhaltsbereitstellungssystem (10), wobei das Verfahren Folgendes beinhaltet:
Versorgen jedes Inhaltsanbieters mit einem Inhaltsanbieter-Autorisierungszertifikat (100);
Versorgen jedes Benutzergeräts mit einem Benutzergeräte-Autorisierungszertifikat (100), wobei die Inhaltsanbieter-Autorisierungszertifikate für die mehreren Inhaltsanbieter und die Benutzergeräte-Autorisierungszertifikate für die mehreren Benutzergeräte aus einer gemeinsamen Quelle stammen; und
Feststellen, ob jeder Inhaltsanbieter (52) und jedes Benutzergerät (56) zur Teilnahme an dem Inhaltsbereitstellungssystem autorisiert ist, über einen gegenseitigen Austausch und Vergleich der genannten Zertifikate zwischen jeweiligen Inhaltsanbietern und Benutzergeräten;
wobei jedes Benutzergerät zum Ausführen einer Anwendung (302) konfiguriert ist, die von jedem jeweiligen Inhaltsanbieter bereitgestellt wird, um das genannte Benutzergerät zum Interagieren mit dem genannten Inhaltsanbieter zu befähigen.

2. Verfahren nach Anspruch 1, das ferner das Signieren der genannten Anwendung mit dem Inhaltsanbieter-Autorisierungszertifikat (100) beinhaltet, um dadurch die genannte Anwendung bei Benutzergeräten zu authentifizieren und zu autorisieren.

3. Verfahren nach Anspruch 2, wobei die Anwendung von einer Root-Zertifizierungsstelle signiert wird.

4. Verfahren nach Anspruch 3, wobei die Anwendung vom Inhaltsanbieter signiert wird.

5. Verfahren nach einem der Ansprüche 2 bis 4, wobei die signierte Anwendung vom Benutzergerät über den Inhaltsanbieter und/oder über einen zentralen Server bereitgestellt wird, der Teil des Inhaltsbereitstellungssystems ist.

6. Verfahren nach Anspruch 5, wobei die signierte Anwendung mit dem Inhaltsanbieter-Autorisierungszertifikat zusammengebündelt wird.

7. Verfahren nach Anspruch 6, wobei das Benutzergerät die Autorisierung der Anwendung in einer oder mehreren der folgenden Phasen prüft: Herunterladen der Anwendung auf das Benutzergerät; Installieren der Anwendung auf dem Benutzergerät; und Ausführen der Anwendung auf dem Benutzergerät.

8. Verfahren nach einem der Ansprüche 1 bis 7, wobei die Anwendung einen Inhaltsanbieter befähigt, Inhaltselemente, typischerweise Audio-/visuelle Medienelemente zu einem Benutzergerät zu übertragen.

9. Verfahren nach einem der Ansprüche 1 bis 8, wobei die Anwendung eine direkte Kommunikation zwischen dem Inhaltsanbieter und dem Benutzergerät ermöglicht.

10. Verfahren nach einem der Ansprüche 1 bis 9, wobei die Anwendung eine verschlüsselte Kommunikation zwischen dem Inhaltsanbieter und dem Benutzergerät ermöglicht.

11. Verfahren nach einem der vorherigen Ansprüche, wobei das Benutzergerät sein Zertifikat zu einem Inhaltsanbieter zusammen mit einer Anforderung von Inhalt überträgt und wobei der Inhaltsanbieter die Autorisierung des Benutzergeräts prüft, um dadurch festzustellen, ob das Benutzergerät ein autorisiertes Benutzergerät innerhalb des Inhaltsbereitstellungssystems ist.

12. System zum Autorisieren mehrerer Benutzergeräte (56) und mehrerer Inhaltsanbieter (52) in einem Inhaltsbereitstellungssystem (10), wobei das System Folgendes umfasst:
mehrere Benutzergeräte (56) und mehrere Inhaltsanbieter (52) ;
Mittel (226) zum Versorgen jedes Inhaltsanbieters mit einem Inhaltsanbieter-Autorisierungszertifikat (100);
Mittel (226) zum Versorgen jedes Benutzergeräts mit einem Benutzergeräte-Autorisierungszertifikat (100), wobei die Inhaltsanbieter-Autorisierungszertifikate für die mehreren Inhaltsanbieter und das Benutzergeräte-Autorisierungszertifikat für die mehreren Benutzergeräte aus einer gemeinsamen Quelle stammen; und
Mittel zum Feststellen, ob jeder Inhaltsanbieter und jedes Benutzergerät zur Teilnahme an dem Inhaltsbereitstellungssystem autorisiert ist, über einen gegenseitigen Austausch und Vergleich der genannten Zertifikate zwischen jeweiligen Inhaltsanbietern und Benutzergeräten;
wobei jedes Benutzergerät zum Ausführen einer Anwendung (302) konfiguriert ist, die von jedem jeweiligen Inhaltsanbieter bereitgestellt wird, um das genannte Benutzergerät zum Interagieren mit dem genannten Inhaltsanbieter zu befähigen.

13. System nach Anspruch 12, wobei das oder jedes Benutzergerät in Form eines Empfängers/Decoders, zum Beispiel einer Set-Top-Box STB vorliegt, der/die vorzugsweise mit einem Anzeigemittel wie einem Fernseher verbunden werden kann.

14. System nach Anspruch 13, wobei jedes Benutzergerät und/oder jeder Inhaltsanbieter mit einem Kommunikationsnetzwerk verbunden werden kann.

15. System nach einem der Ansprüche 12 bis 14, das ferner einen zentralen Server umfasst, der Mittel zum Erzeugen oder Signieren der Zertifikate umfasst.

## Revendications

1. Procédé d'autorisation de multiples dispositifs utilisateurs (56) et de multiples fournisseurs de contenu (52) dans un système de fourniture de contenu (10), le procédé comprenant :
pourvoir chaque fournisseur de contenu avec un certificat d'autorisation de fournisseur de contenu (100) ;
pourvoir chaque dispositif utilisateur avec un certificat d'autorisation de dispositif utilisateur (100),
dans lequel les certificats d'autorisation de fournisseur de contenu pour les multiples fournisseurs de contenu et les certificats d'autorisation de dispositif utilisateur pour les multiples dispositifs utilisateurs proviennent d'une source commune ; et
déterminer si chaque fournisseur de contenu (52) et chaque dispositif utilisateur (56) sont autorisés à participer au système de fourniture de contenu via un échange mutuel et une comparaison desdits certificats entre les fournisseurs de contenu et les dispositifs utilisateurs respectifs ;
dans lequel chaque dispositif utilisateur est configuré pour exécuter une application (302) fournie par chaque fournisseur de contenu respectif afin de permettre audit dispositif utilisateur d'interagir avec ledit fournisseur de contenu.

2. Procédé selon la revendication 1, comprenant en outre signer ladite application avec le certificat d'autorisation de fournisseur de contenu (100) pour authentifier ou autoriser ainsi ladite application aux dispositifs utilisateurs.

3. Procédé selon la revendication 2, dans lequel l'application est signée par une Autorité de Certification de Base.

4. Procédé selon la revendication 3, dans lequel l'application est signée par le fournisseur de contenu.

5. Procédé selon l'une quelconque des revendications 2 à 4, dans lequel l'application signée est fournie au dispositif utilisateur via le fournisseur de contenu et/ou via un serveur central faisant partie du système de fourniture de contenu.

6. Procédé selon la revendication 5, dans lequel l'application signée est groupée avec le certificat d'autorisation de fournisseur de contenu.

7. Procédé selon la revendication 6, dans lequel le dispositif utilisateur vérifie l'autorisation de l'application à l'un quelconque ou plusieurs des stades suivants : le téléchargement de l'application au dispositif utilisateur ; l'installation de l'application sur le dispositif utilisateur ; et l'exécution de l'application sur le dispositif utilisateur.

8. Procédé selon l'une quelconque des revendications 1 à 7, dans lequel l'application permet à un fournisseur de contenu de transférer des éléments de contenu, typiquement des éléments de médias audio/visuels, à un dispositif utilisateur.

9. Procédé selon l'une quelconque des revendications 1 à 8, dans lequel l'application permet la communication directe entre le fournisseur de contenu et le dispositif utilisateur.

10. Procédé selon l'une quelconque des revendications 1 à 9, dans lequel l'application permet la communication chiffrée entre le fournisseur de contenu et le dispositif utilisateur.

11. Procédé selon l'une quelconque des revendications précédentes, dans lequel le dispositif utilisateur transmet son certificat à un fournisseur de contenu avec une requête de contenu et dans lequel le fournisseur de contenu vérifie l'autorisation du dispositif utilisateur afin de déterminer ainsi si le dispositif utilisateur est un dispositif utilisateur autorisé dans le système de fourniture de contenu.

12. Système d'autorisation de multiples dispositifs utilisateurs (56) et de multiples fournisseurs de contenu (52) dans un système de fourniture de contenu (10), le système comprenant :
de multiples dispositifs utilisateurs (56) et de multiples fournisseurs de contenu (52) ;
un moyen (226) pour pourvoir chaque fournisseur de contenu avec un certificat d'autorisation de fournisseur de contenu (100) ;
un moyen (226) pour pourvoir chaque dispositif utilisateur avec un certificat d'autorisation de dispositif utilisateur (100), dans lequel les certificats d'autorisation de fournisseur de contenu pour les multiples fournisseurs de contenu et les certificats d'autorisation de dispositif utilisateur pour les multiples dispositifs utilisateurs proviennent d'une source commune ; et
un moyen pour déterminer si chaque fournisseur de contenu et chaque dispositif utilisateur sont autorisés à participer au système de fourniture de contenu via un échange mutuel et une comparaison desdits certificats entre les fournisseurs de contenu et les dispositifs utilisateurs respectifs,
dans lequel chaque dispositif utilisateur est configuré pour exécuter une application (302) fournie par chaque fournisseur de contenu respectif afin de permettre audit dispositif utilisateur d'interagir avec ledit fournisseur de contenu.

13. Système selon la revendication 12, dans lequel le ou chaque dispositif utilisateur est sous forme d'un récepteur/décodeur, par exemple un décodeur numérique, STB, pouvant de préférence être connecté à un moyen d'affichage tel qu'une télévision.

14. Système selon la revendication 13, dans lequel chaque dispositif utilisateur et/ou fournisseur de contenu peut être connecté à un réseau de communication.

15. Système selon l'une quelconque des revendications 12 à 14, comprenant en outre un serveur central comprenant un moyen pour générer ou signer les certificats.
